# EUROPÄISCHE PATENTSCHRIFT

(11) **EP 0 461 345 B1**
(45) Veröffentlichungstag und Bekanntmachung des Hinweises auf die Patenterteilung: **18.05.1994**
(21) Anmeldenummer: 91103241.5
(22) Anmeldetag: 04.03.1991
(51) Int. Cl.: B62D 27/00

(54) **Karosserie für ein Kraftfahrzeug, insbesondere einen Personenkraftwagen**
Body for a motor vehicle, especially for a passenger car
Carrosserie pour un véhicule automobile, en particulier pour une voiture de tourisme

(30) Priorität: 09.06.1990 DE 4018592
(43) Veröffentlichungstag der Anmeldung: 18.12.1991
(73) Patentinhaber: Dr.Ing.h.c. F. Porsche Aktiengesellschaft, 70435 Stuttgart (DE)
(72) Erfinder: Wurl, Willi, Dipl.-Ing., W-7532 Niefern-Öschelbronn (DE)

(56) Entgegenhaltungen:
- CH-B- 287 058
- DE-A- 3 346 986
- DE-A- 3 740 401
- DE-B- 2 018 802

## Beschreibung

Die Erfindung betrifft eine Karosserie für ein Kraftfahrzeug, insbesondere einen Personenkraftwagen, die aus einem Unterteil und einem Oberteil zusammengesetzt ist, wobei Unterteil und Oberteil etwa in Höhe einer Gürtellinie miteinander verbunden sind.

Bei einer bekannten Anordnung der eingangs genannten Gattung (CH-A 287 058) ist die Personenwagenkarosserie aus einem Unterteil und einem Oberteil zusammengesetzt. Die Verbindung beider Teile erfolgt etwa in Höhe einer Gürtellinie des Fahrzeugs.

Oberteil und/oder Unterteil sind in den gemeinsamen Verbindungsbereichen mit entsprechenden Abstellungen versehen und durch Schweißen, Schrauben, Falzen oder dgl. miteinander verbunden. Spezielle Knotenbleche oder Knotenelemente in den gemeinsamen Verbindungsbereichen sind aus der CH-A 287 058 nicht herleitbar.

Aus der DE-A 33 46 986 geht ein Wagenkasten für einen Personenkraftwagen hervor, dessen tragende Konstruktion durch aus Leichtmetall hergestellte Strangpreßprofile in Verbindung mit aus Leichtmetall gefertigten Knotenelementen gebildet wird. Eine Trennung Oberteil/Unterteil ist bei diesem Wagenkasten nicht vorgesehen. Bei der DE-A 33 46 986 sind jeweils zwei oder mehrere Strangpreßprofile fest mit einem einzigen, dazwischenliegend angeordneten Knotenelement verbunden.

Aufgabe der Erfindung ist es, an einer Karosserie für einen Personenkraftwagen solche Vorkehrungen zu treffen, daß das Unterteil in einfacher Weise mit unterschiedlichen Oberteilen (verschiedene Dachkonzepte) versehen werden kann und daß eine gute Verbindung zwischen Unterteil und Oberteil erzielt wird.

Erfindungsgemäß wird diese Aufgabe durch die kennzeichnenden Merkmale des Anspruchs 1 gelöst. Weitere, die Erfindung in vorteilhafter Weise ausgestaltende Merkmale sind in den Unteransprüchen enthalten.

Die mit der Erfindung hauptsächlich erzielten Vorteile sind darin zu sehen, daß durch die Anordnung von jeweils zwei getrennten Knotenelementen (eines am Unterteil, eines am Oberteil) in jedem gemeinsamen Verbindungsbereich einerseits eine funktionsgerechte Verbindung zwischen Oberteil und Unterteil geschaffen wird und andererseits ein vorhandenes Unterteil in einfacher Weise mit unterschiedlichen Oberteilen kombiniert werden kann. Ohne aufwendige Karosseriearbeiten kann auf diese Weise ein Unterteil wahlweise mit einem Coupédach, einem Targadach oder einem Verdeck ausgestattet oder nachträglich nachgerüstet werden.

Durch die Trennung Unterteil/Oberteil können ferner die Innenausstattung, die Sitze und dergleichen von oben montiert werden, was eine Montageerleichterung darstellt. Durch die Zentriereinrichtungen wird ein einwandfreier Sitz des Oberteils relativ zum Unterteil erzielt.

Ein Ausführungsbeispiel der Erfindung ist in der Zeichnung dargestellt und wird im folgenden näher beschrieben.

Es zeigt
- Fig. 1: in perspektivischer Darstellung eine aus separatem Unterteil und Oberteil bestehende Pkw-Karosserie im Rohzustand,
- Fig. 2: in perspektivischer Darstellung das als Coupédach ausgebildete Oberteil,
- Fig. 3: einen Schnitt nach der Linie III-III der Fig. 2 in größerem Maßstab,
- Fig. 4: einen Schnitt nach der Linie IV-IV der Fig. 2 in größerem Maßstab,
- Fig. 5: einen Schnitt nach der Linie V-V der Fig. 2 in größerem Maßstab,
- Fig. 6: eine Einzelheit X der Fig. 1 in größerem Maßstab und in Explosionsdarstellung,
- Fig. 7: einen Schnitt nach der Linie VII-VII der Fig. 6 durch die beiden hinteren Knotenelemente in größerem Maßstab,
- Fig. 8: eine Einzelheit Y der Fig. 1 in größerem Maßstab und in Explosionsdarstellung,
- Fig. 9: einen Schnitt nach der Linie IX-IX der Fig. 8 durch die beiden vorderen Knotenelemente in größerem Maßstab.

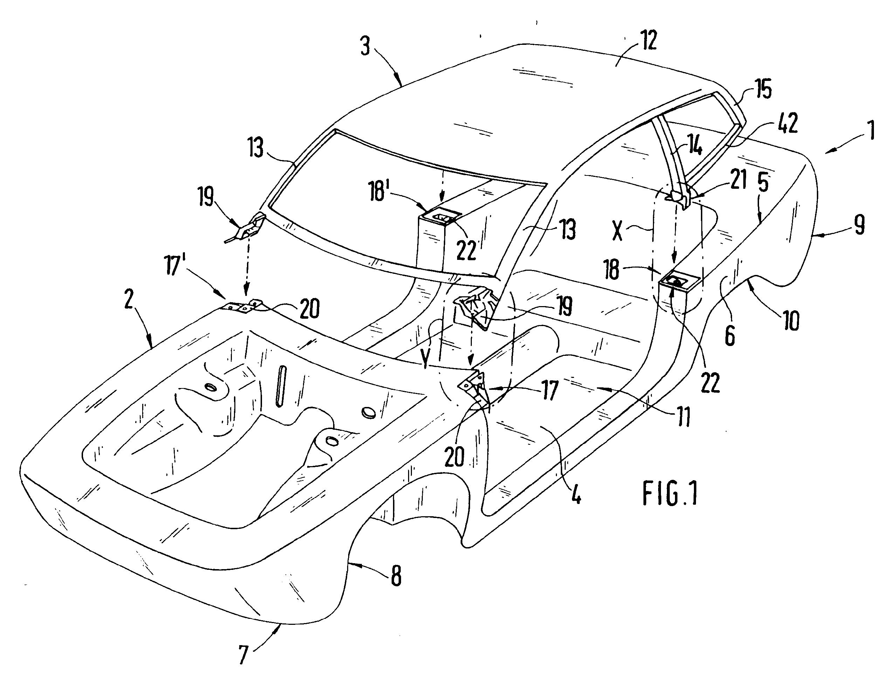

In Fig. 1 ist eine Karosserie 1 für einen Personenkraftwagen dargestellt, die sich aus einem separat gefertigten Unterteil 2 und einem ebenfalls separat hergestellten Oberteil 3 zusammensetzt. Das Unterteil 2 der gezeigten Pkw-Karosserie umfaßt einen Karosserieboden 4, bis zu einer Gürtellinie 5 ragende Seitenwände 6, einen Vorderwagen 7 mit Radkästen 8 für die Vorderräder, ein Heckteil 9 mit Radkästen 10 für die Hinterräder und seitliche Türöffnungen 11.

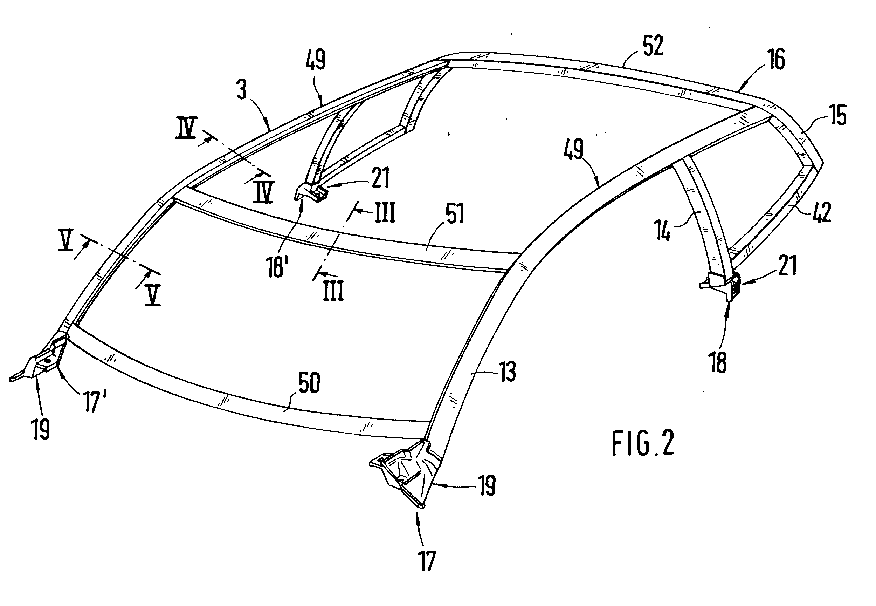

Das Oberteil 3 besteht aus einem Dach 12 und Karosseriesäulen 13, 14, 15. Die tragende Rahmenstruktur 16 von Unterteil 2 und Oberteil 3 besteht im wesentlichen aus Strangpreßprofilen, die über Knotenelemente aus Guß miteinander verbunden sind, wobei sowohl die Strangpreßprofile als auch die Knotenelemente vorzugsweise aus Leichtmetall gefertigt sind. In Fig. 2 ist die Rahmenstruktur 16 des Oberteils 3 dargestellt, wogegen die Rahmenstruktur 16 des Unterteils 2 nicht näher gezeigt ist.

Gemäß den Fig. 1 und 2 sind in den gemeinsamen Verbindungsbereichen 17, 17', 18, 18' sowohl am Unterteil 2 als auch am Oberteil 3 jeweils separate Knotenelemente 19, 20 bzw. 21, 22 angeordnet, die bei der Montage der Karosserie zusammengefügt werden, so daß ein formschlüssiges Zusammenwirken der jeweils miteinander korrespondierenden Knotenelemente 19 und 20 bzw. 21 und 22 erfolgt. Ferner ist zwischen den korrespondierenden Knotenelementen 19 und 20 bzw. 21 und 22 zusätzlich zumindest eine lösbare Verbindung 24, z. B. eine Schraubverbindung vorgesehen.

Im Ausführungsbeispiel sind an jeder Längsseite der Karosserie 1 zwei hintereinanderliegende Verbindungsbereiche 17, 18 bzw. 17', 18' vorgesehen (Fig. 1).

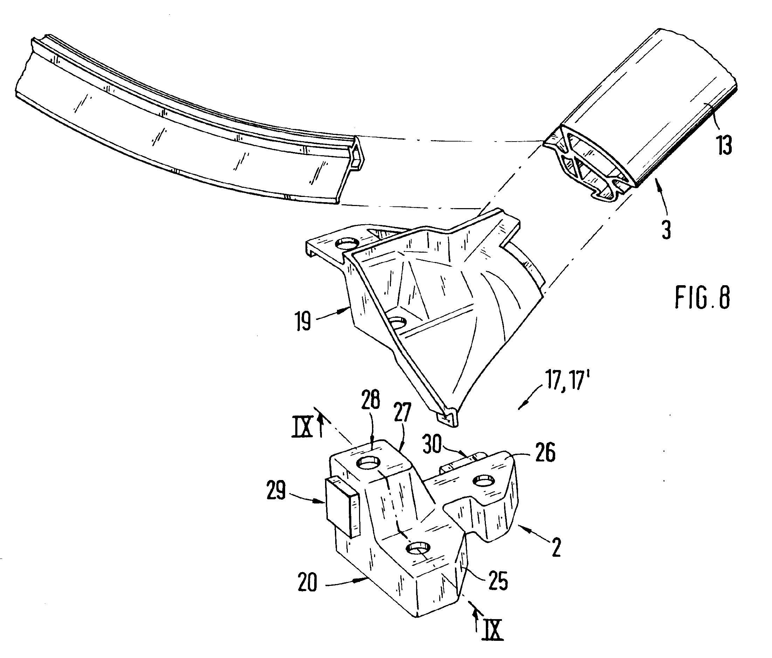

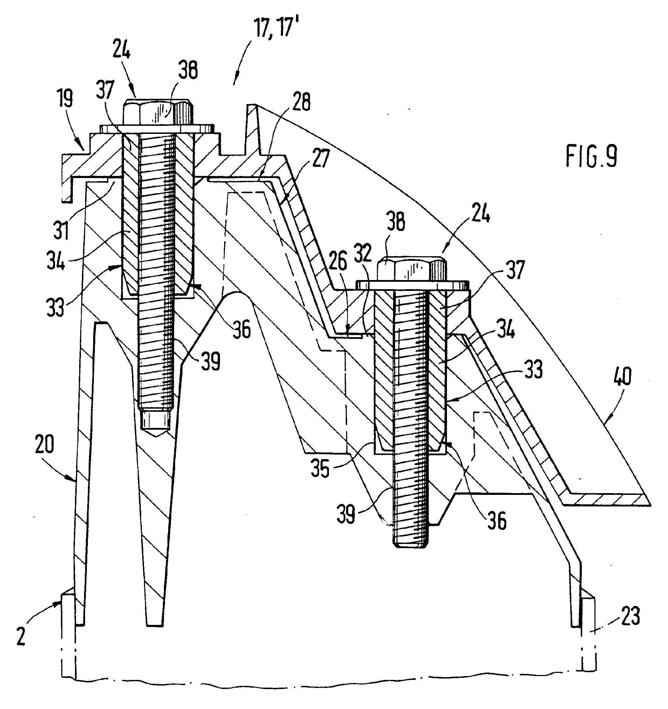

In einem vorderen Verbindungsbereich 17, 17' ist am Unterteil 2 ein Knotenelement 20 vorgesehen, das von oben in eine offene aufrechte Scharniersäule 23 eingesteckt ist (Fig. 8 und 9).

Das Knotenelement 20 weist einen der Innenkontur der Scharniersäule 23 angepaßten Grundkörper 25 mit einer etwa horizontal verlaufenden oberen Begrenzungsfläche 26 auf, wobei in einem Eckbereich der Begrenzungsfläche 26 eine etwa quaderförmig ausgebildete Erhebung 27 vorgesehen ist, deren obere Begrenzungsfläche 28 ebenfalls horizontal ausgerichtet ist. Ferner weist das Knotenelement 20 zwei Anformungen 29, 30 auf, an die einerseits ein querverlaufender - nicht näher dargestellter - Schalttafelquerträger und andererseits ein ebenfalls nicht gezeigter Längsträger vorn oben angeschlossen sind. Die beiden Anformungen 29, 30 sind der Profilform von Schalttafelquerträger und Längsträger vorn oben angepaßt und ragen abschnittsweise in Endbereiche dieser Träger hinein.

Als Gegenstück zum Knotenelement 20 ist am Oberteil 3 ein Knotenelement 19 vorgesehen, das mit dem vorderen untenliegenden Ende der Säule 13 fest verbunden ist. Das Knotenelement 19 ist abschnittsweise in die Säule 13 eingesteckt. Ferner ist das Knotenelement 19 dem stufenförmigen Verlauf des unteren Knotenelementes 20 angepaßt.

Beim Zusammenbau von Oberteil 3 und Unterteil 2 liegt das obere Knotenelement 19 örtlich an vorstehenden, ringförmigen Auflageabschnitten 31, 32 des unteren Knotenelementes 20 auf, wobei die Auflageabschnitte 31, 32 an den horizontalen Begrenzungsflächen 26, 28 ausgebildet sind.

Zur Montageerleichterung beim Zusammenbau ist im vorderen Verbindungsbereich 17, 17' eine Zentriereinrichtung 33 zwischen den beiden Knotenelementen 19, 20 vorgesehen. Die Zentriereinrichtung 33 umfaßt zumindest einen Zentrierzapfen 34, der mit einer korrespondierenden Aufnahme 35 formschlüssig zusammenwirkt. Gemäß Fig. 9 sind am oberen Knotenelement 19 zwei mit Abstand zueinander angeordnete Zentrierzapfen 34 angeordnet, die in Aufnahmen 35 des unteren Knotenelementes 20 eingreifen. Die Zentrierzapfen 34 sind am oberen Knotenelement 19 befestigt, wobei ein zylindrischer Abschnitt durch eine Bohrung des Knotenelementes 19 hindurchgeführt ist und nach unten hin vorsteht. Ein unterer Endbereich des Zentrierzapfens 34 weist außenseitig eine Anphasung 36 zum leichteren Einführen in die Aufnahme 35 auf.

Die Zentrierzapfen 34 sind gemäß Fig. 9 als Hohlzylinder 37 ausgebildet, dergestalt, daß Befestigungsschrauben 38 zum Verbinden der beiden Knotenelemente 19, 20 durch sie hindurchgeführt werden können. Im Ausführungsbeispiel sind jeweils drei parallel zueinander verlaufende Befestigungsschrauben 38 zwischen beiden Knotenelementen 19, 20 vorgesehen, wobei die Befestigungsschrauben 38 etwa senkrecht ausgerichtet sind.

Die Befestigungsschrauben 38 werden von oben in Gewindebohrungen 39 des unteren Knotenelementes 20 eingedreht. Das obere Knotenelement 19 weist örtlich eine gebogene Stützfläche 40 auf, an der örtlich ein nicht gezeigter vorderer Kotflügel anliegt, wobei bei zusammengefügter Karosserie der Kotflügel das obere Knotenelement 19 fast vollständig abdeckt.

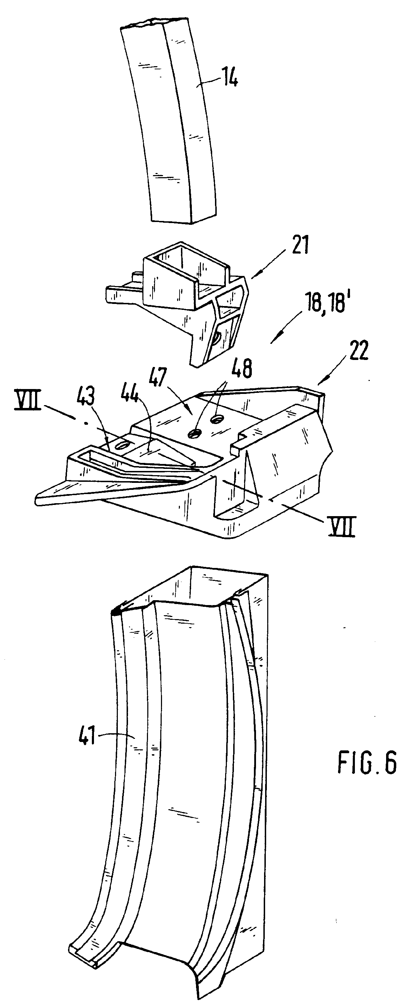

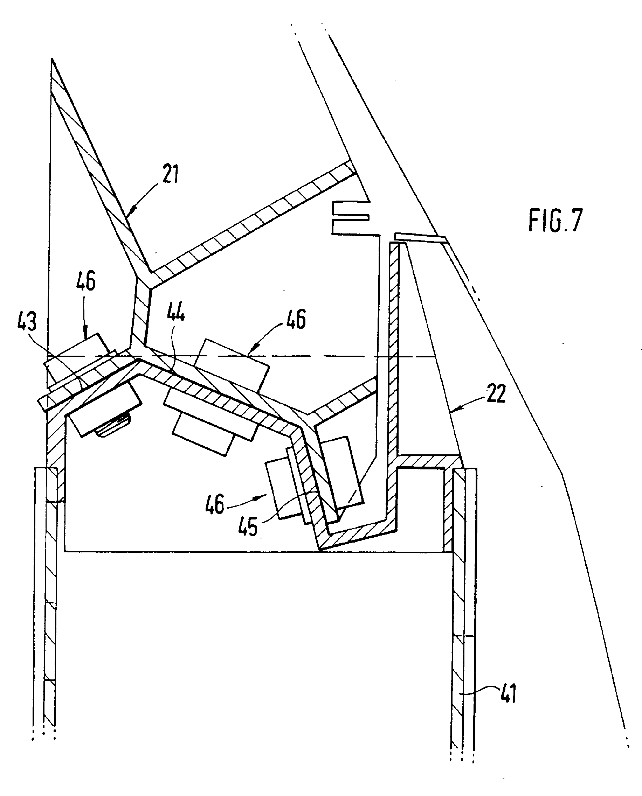

In einem hinteren Verbindungsbereich 18, 18' sind ebenfalls zwei getrennte Knotenelemente 21, 22 auf jeder Fahrzeuglängsseite vorgesehen (Fig. 6). Ein unteres Knotenelement ist dabei von oben in die aufrechte Mittel- oder Schloßsäule 41 eingesteckt und in Lage gehalten. An dieses untere Knotenelement 22 ist ein nicht gezeigter Längsträger hinten oben angeschlossen. Ein oberes Knotenelement 21 ist in die obenliegende Säule 14 eingeschoben und mit dieser fest verbunden. An dieses Knotenelement 21 ist ein unteres Rahmenteil 42 eines nicht dargestellten Fondseitenfensters angeschlossen. Am oberen und am unteren Knotenelement 21, 22 sind in einem gemeinsamen Auflagebereich jeweils drei winkelig zueinander angeordnete Auflageflächen 43, 44, 45 angeordnet, die aufeinander abgestimmt sind (Fig. 6 und 7).

An jeder Auflagefläche 43, 44, 45 ist eine Befestigungsschraube 46 vorgesehen, wobei die drei Befestigungsschrauben 46 unterschiedlich ausgerichtet sind. Eine innenliegende Befestigungsschraube 46 wird von oben montiert, wogegen die beiden anderen Befestigungsschrauben 46 von unten her eingedreht werden.

Im hinteren Verbindungsbereich 18, 18' wird die Zentrierung von Oberteil 3 und Unterteil 2 durch die unterschiedlichen Schrägen der drei Auflageflächen 43, 44, 45 der beiden Knotenelemente 21, 22 gebildet. Ferner weist das untere Knotenelement 22 eine ebene horizontale Fläche 47 auf, an der zwei Gewindebohrungen 48 vorgesehen sind, in die Befestigungsschrauben für einen Lagerbock eines nicht näher dargestellten Cabrio-Verdecks eingedreht werden können.

Sämtliche Knotenelemente 19, 20, 21, 22 sind der Form der sie umgebenden Trägerstrukturen angepaßt, wobei die Knotenelemente 19, 20, 21, 22 zusätzlich durch Kleben oder Schweißen mit der angrenzenden Trägerstruktur verbunden sind.

In Fig. 2 ist ein Coupédach dargestellt, das aus einer Rahmenstruktur 16 und dem eigentlichen Dach besteht. Die Rahmenstruktur 16 umfaßt zwei seitlich außenliegende Dachlängsholme 49, die über einen Windlaufquerträger 50, einen Dachrahmenquerträger vorn 51 und einen Dachrahmenquerträger hinten 52 zu einem käfigartigen Gebilde zusammengesetzt sind. Ein vorderer Abschnitt der Dachlängsholme 49 bildet abschnittsweise die Säule 13 (Windschutzscheiben- oder A-Säule).

Ferner umfaßt die Rahmenstruktur 16 eine B-Säule 14 und ein längsverlaufendes Rahmenteil 42 für das Fondseitenfenster, wobei das Rahmenteil 42 mit der B-Säule 14 und dem Dachrahmenquerträger hinten 52 fest verbunden ist. In den durch die beiden Dachlängsholme 49, den unteren Windlaufquerträger 50 und den Dachrahmenquerträger vorn 51 gebildeten Rahmen ist eine Windschutzscheibe 53 eingesetzt, die mittels eines Klebekörpers mit dem Rahmen verbunden ist. Der hintere Bereich der Rahmenstruktur 16 wird entweder durch ein Blechteil, ein Kunststoffteil oder eine großflächige Scheibe abgedeckt.

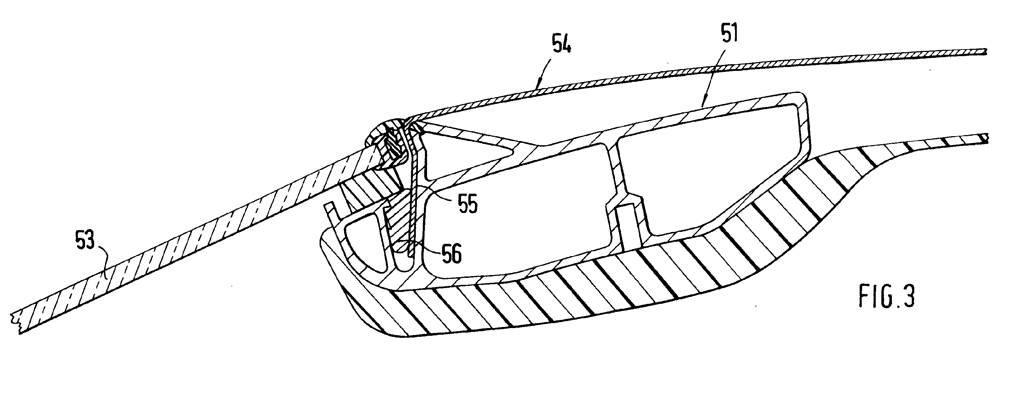

Gemäß Fig. 3 ist ein aus Aluminium gefertigtes Blechteil 54 vorgesehen, das über eine Klemmverbindung am Dachrahmenquerträger vorn 51, den beiden seitlichen Dachlängsholmen 49 und dem Dachrahmenquerträger hinten 52 in Lage gehalten ist. Ein nach unten abgestellter Steg 55 des Daches wird mittels eines Klemmkörpers 55 befestigt, wobei der Klemmkörper 55 in eine Aufnahmenut des Strangpreßprofiles eingesetzt wird. Zusätzlich ist eine Verklebung zwischen dem Klemmkörper 55 und der Aufnahmenut des Stranpreßprofils vorgesehen.

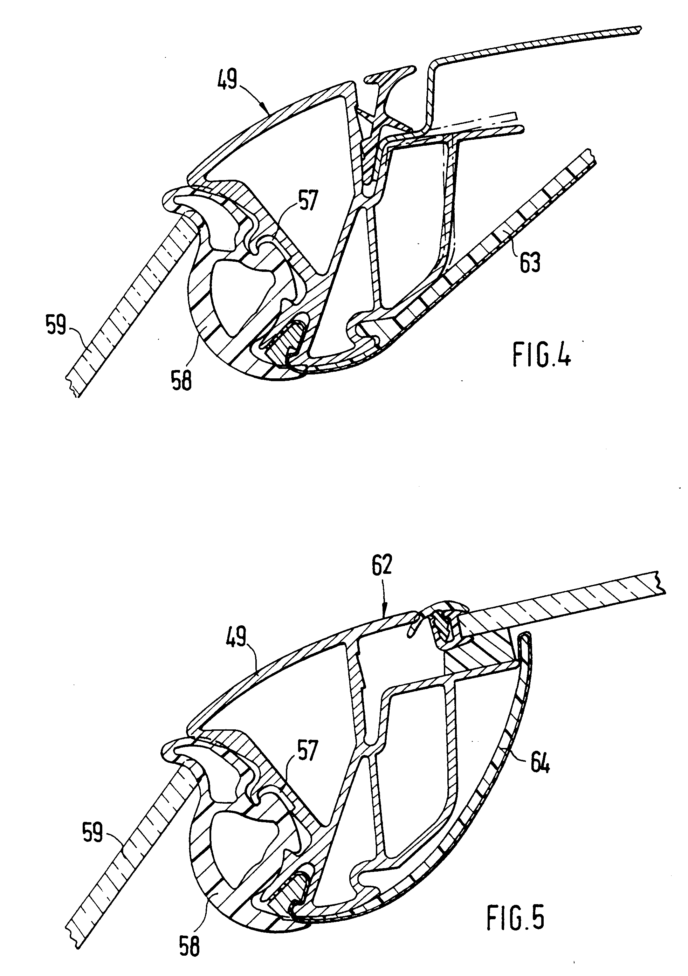

Die Fig. 4 und 5 zeigen jeweils einen Schnitt durch den seitlichen Dachlängsholm 49, wobei das Strangpreßprofil aus Steifigkeitsgründen als Mehrkammerprofil ausgebildet ist. Das Strangpreßprofil weist örtlich eine hinterschnitttene Aufnahmenut 57 für einen Dichtkörper 58 auf, der mit einer seitlichen Türscheibe 59 zusammenwirkt. Ferner ist am Strangpreßprofil ein Aufnahmesteg 60 für den Klebekörper der Windschutzscheibe 53 bzw. eine Abstellung 61 des Daches 12 auf. Durch Beschneiden eines außenliegenden Flansches 62 des Strangpreßprofiles läßt sich eine unterschiedliche Breite des Strangpreßprofiles entlang seiner Längserstreckung erzielen. Außerdem ist ein Dachhimmel 63 bzw. eine Säulenverkleidung 64 am Dachlängsholm 49 befestigt. Hierzu sind am Strangpreßprofil eine oder mehrere Aufnahmenuten vorgesehen.

## Patentansprüche

1. Karosserie für ein Kraftfahrzeug, insbesondere einen Personenkraftwagen, die aus einem Unterteil (2) und einem Oberteil (3) zusammengesetzt ist, wobei Unterteil (2) und Oberteil (3) etwa in Höhe einer Gürtellinie miteinander verbunden sind, **dadurch gekennzeichnet,** daß die tragenden Rahmenstrukturen (16) von Unterteil (2) und Oberteil (3) im wesentlichen durch Strangpreßprofile aus Leichtmetall gebildet werden, wobei angrenzende Strangpreßprofile durch Knotenelemente aus Leichtmetallguß miteinander verbunden sind und daß in gemeinsamen Verbindungsbereichen (17, 17', 18, 18') von Unterteil (2) und Oberteil (3) sowohl am Oberteil (3) als auch am Unterteil (2) jeweils separate Knotenelemente (19, 20, 21, 22) angeordnet sind, die bei zusammengesetzter Karosserie formschlüssig miteinander zusammenwirken und daß in jedem Verbindungsbereich (17, 17', 18, 18') zusätzlich zumindest eine lösbare Verbindung (24) zwischen den korrespondierenden, übereinanderliegenden Knotenelementen (19, 20 bzw. 21, 22) vorgesehen ist, wobei im vorderen Verbindungsbereich (17, 17') zwischen Oberteil (3) und Unterteil (2) eine Zentriereinrichtung (33) angeordnet ist, die zumindest einen etwa aufrecht ausgerichteten Zentrierzapfen (34) umfaßt, der in eine korrespondierende Aufnahme (35) eingreift und daß durch den als Hohlzylinder (37) ausgebildeten Zentrierzapfen Befestigungsschrauben (38) zum Verbinden von Oberteil (3) und Unterteil (2) hindurchgeführt sind.

2. Karosserie nach Anspruch 1, **dadurch gekennzeichnet,** daß auf jeder Längsseite der Karosserie zumindest zwei gemeinsame Verbindungsbereiche (17, 18 bzw. 17', 18') zwischen Oberteil (3) und Unterteil (2) vorgesehen sind.

3. Karosserie nach Anspruch 1, **dadurch gekennnzeichnet,** daß in einem vorderen Verbindungsbereich (17, 17') am Unterteil (2) ein Knotenelement (20) vorgesehen ist, das mit einer angrenzenden Scharniersäule (23) fest verbunden ist und daß an dieses Knotenelement (20) ferner ein Längsträger vorne oben und ein Schalttafelquerträger angeschlossen sind.

4. Karosserie nach Anspruch 1, **dadurch gekennzeichnet,** daß im vorderen Verbindungsbereich (17, 17') am Oberteil (3) ein Knotenelement (19) angebracht ist, das mit der benachbarten Säule (13) fest verbunden ist.

5. Karosserie nach Anspruch 1, **dadurch gekennzeichnet,** daß der Zentrierzapfen (34) am oben liegenden Knotenelement (19) angeordnet ist, wogegen die Aufnahme (35) am unteren Knotenelement (20) vorgesehen ist.

6. Karosserie nach Anspruch 1, **dadurch gekennzeichnet,** daß in einem hinteren Verbindungsbereich (18, 18') ein am Unterteil (2) befestigtes Knotenelement (22) vorgesehen ist, das mit einer angrenzenden Mittel- oder Schloßsäule (41) fest verbunden ist, wobei an dieses Knotenelement (22) ein Längsträger hinten oben angeschlossen ist.

7. Karosserie nach Anspruch 1, **dadurch gekennzeichnet,** daß in einem hintenliegenden Verbindungsbereich (18, 18') am Oberteil (3) ein Knotenelement (21) angebracht ist, das mit einer aufrechten Säule (14) und einem Rahmen für ein Fondseitenfenster verbunden ist.

8. Karosserie nach Anspruch 1, **dadurch gekennzeichnet,** daß an den beiden hinteren Knotenelementen (21, 22) drei winkelig zueinander ausgerichtete Auflageflächen (43, 44, 45) angeordnet sind, wobei im Bereich jeder Auflagefläche (43, 44, 45) eine Befestigungsschraube (46) vorgesehen ist.

## Claims

1. A body for a motor vehicle, in particular a passenger car, formed by a lower part (2) and an upper part (3), wherein the lower part (2) and the upper part (3) are joined together substantially at the level of a waist line, **characterized in that** the supporting frame structures (16) of the lower part (2) and the upper part (3) are essentially formed by extruded sections of light metal, wherein adjacent extruded sections are joined together by junction members of cast light metal, and separate junction members (19, 20, 21, 22), cooperating with one another in a positively locking manner when the body is fitted together, are arranged both on the upper part (3) and on the lower part (2) in common connexion areas (17, 17', 18, 18') of the lower part (2) and the upper part (3), and in each connexion area (17, 17', 18, 18') at least one detachable connexion (24) is additionally provided between the corresponding junction members (19, 20 and 21, 22 respectively) arranged one above the other, wherein a centring device (33), which comprises at least one centring pin (34) orientated substantially vertically and engaging in a corresponding receiving means (35), is arranged between the upper part (3) and the lower part (2) in the front connexion area (17, 17'), and fastening bolts (38) for connecting the upper part (3) and the lower part (2) pass through the centring pin constructed in the form of a hollow cylinder (37).

2. A body according to Claim 1, **characterized in that** at least two common connexion areas (17, 18 and 17', 18' respectively) are arranged between the upper part (3) and the lower part (2) on each longitudinal side of the body.

3. A body according to Claim 1, **characterized in that** a junction member (20) rigidly connected to an adjacent hinge column (23) is provided in a front connexion area (17, 17') on the lower part (2), and, in addition, a longitudinal support at the top in front and a transverse support for a switchboard are attached to the said junction member (20).

4. A body according to Claim 1, **characterized in that** in the front connexion area (17, 17') a junction member (19) rigidly connected to the adjacent column (13) is attached to the upper part (3).

5. A body according to Claim 1, **characterized in that** the centring pin (34) is arranged on the junction member (19) situated at the top, whereas the receiving means (35) is provided on the lower junction member (20).

6. A body according to Claim 1, **characterized in** **that** a junction member (22) secured to the lower part (2) and rigidly connected to an adjacent middle or lock column (41) is provided in a rear connexion area (18, 18'), wherein a longitudinal support is attached to the said junction member (22) at the top towards the rear.

7. A body according to Claim 1, **characterized in that** a junction member (21) connected to a vertical column (14) and to a frame for a rear side window is attached to the upper part (3) in a connexion area (18, 18') situated at the rear.

8. A body according to Claim 1, **characterized in that** three abutment surfaces (43, 44, 45) orientated at an angle to one another are arranged on the two rear junction members (21, 22), wherein a fastening bolt (46) is provided in the region of each abutment surface (43, 44, 45).

## Revendications

1. Carrosserie de véhicule automobile, en particulier de voiture de tourisme, qui est constituée d'une partie inférieure (2) et d'une partie supérieure (3), la partie inférieure (2) et la partie supérieure (3) étant assemblées entre elles à peu près à hauteur d'une ligne médiane, caractérisée en ce que les structures en cadre (16) portantes de la partie inférieure (2) et de la partie supérieure (3) sont essentiellement formées par des profilés extrudés en métal léger, les profilés extrudés adjacents étant assemblés entre eux par des éléments en noeud en fonte de métal léger et en ce que dans les zones d'assemblage (17, 17', 18, 18') communes de la partie inférieure (2) et de la partie supérieure (3), il est prévu sur la partie supérieure (3) comme sur la partie inférieure (2) des éléments en noeud (19, 20, 21, 22) séparés qui coopèrent entre eux, par concordance de forme, lorsque la carrosserie est assemblée et en ce que dans chaque zone d'assemblage (17, 17', 18, 18') il est prévu en supplément au moins une liaison (24) amovible entre les éléments en noeud (19, 20) ou (21, 22) superposés, correspondants, dans la zone de liaison (17, 17') avant, entre la partie supérieure (3) et la partie inférieure (3), un dispositif de centrage (33) étant prévu qui comprend au moins un tenon de centrage (34) orienté à peu près verticalement, qui s'engage dans un logement (35) correspondant et en ce que des vis de fixation (38) traversent le tenon de centrage, conçu en cylindre creux (37), pour assembler la partie supérieure (3) et la partie inférieure (2).

2. Carrosserie selon la revendication 1, caractérisée en ce que sur chaque côté longitudinal de la carrosserie il est prévu au moins deux zones d'assemblage (17, 18 ou 17', 18') communes entre la partie supérieure (3) et la partie inférieure (2).

3. Carrosserie selon la revendication 1, caractérisée en ce que dans une zone d'assemblage (17, 17') avant il est prévu sur la partie inférieure (2), un élément en noeud (20) qui est solidaire d'un montant de charnière (23) adjacent et en ce que sur cet élément en noeud (20) se rattachent en outre un longeron à la partie supérieure avant et une traverse de tableau de bord.

4. Carrosserie selon la revendication 1, caractérisée en ce que dans la zone d'assemblage avant (17, 17') il est prévu sur la partie supérieure (3) un élément en noeud (19) qui est solidaire du montant (13) voisin.

5. Carrosserie selon la revendication 1, caractérisée en ce que le tenon de centrage (34) est prévu sur l'élément en noeud (19) supérieur, tandis que le logement (35) est prévu sur le logement en noeud (20) inférieur.

6. Carrosserie selon la revendication 1, caractérisée en ce que dans une zone d'assemblage (18, 18') arrière il est prévu un élément en noeud (22) fixé sur la partie inférieure (2), qui est solidaire d'un montant central ou de serrure (41) adjacent, un longeron se rattachant à l'arrière en haut, sur cet élément en noeud (22).

7. Carrosserie selon la revendication 1, caractérisée en ce que dans une zone d'assemblage (18, 18') située à l'arrière il est placé sur la partie supérieure (3) un élément en noeud (21) qui est relié à un montant (14) vertical et à un cadre pour une fenêtre arrière latérale.

8. Carrosserie selon la revendication 1, caractérisée en ce que sur les deux éléments en noeud (21, 22) arrière sont prévues trois surfaces d'appui (43, 44, 45) formant un angle entre elles, une vis de fixation (46) étant prévue dans la zone de chaque surface d'appui (43, 44, 45).
